# EUROPEAN PATENT SPECIFICATION

(11) **EP 1 012 079 B1**
(45) Date of publication and mention of the grant of the patent: **12.10.2005**
(21) Application number: 98910774.3
(22) Date of filing: 24.03.1998
(51) Int. Cl.: B65G 19/26, B27B 25/04, B65G 19/24

(54) **CLEARING CONVEYOR FOR SIDEBOARDS**
ABFUHR-FÖRDERER FÜR BRETTER
TRANSPORTEUR PERMETTANT D'EVACUER DES PLANCHES PERIPHERIQUES

(30) Priority: 25.03.1997 FI 971236
(43) Date of publication of application: 28.06.2000
(73) Proprietor: Heinolan Sahakoneet OY, 18101 Heinola (FI)
(72) Inventor: SUNTIO, Ossi, FIN-49490 Neuvoton (FI)
(74) Representative: Tanhua, Pekka Vilhelm
(86) International application number: PCT/FI1998/000261
(87) International publication number: WO 1998/042601

(56) References cited:
- EP-A- 0 551 804
- EP-A- 0 597 354
- FR-A- 2 365 504
- GB-A- 2 072 126
- DERWENT'S ABSTRACT, No. 84-223687/36, week 8436; & SU,A,1 062 140 (LENGD WATER TRANSP) 23 December 1983.

## Description

The invention relates generally to chain conveyors. The invention relates especially to timber chain conveyors having adjustable width.

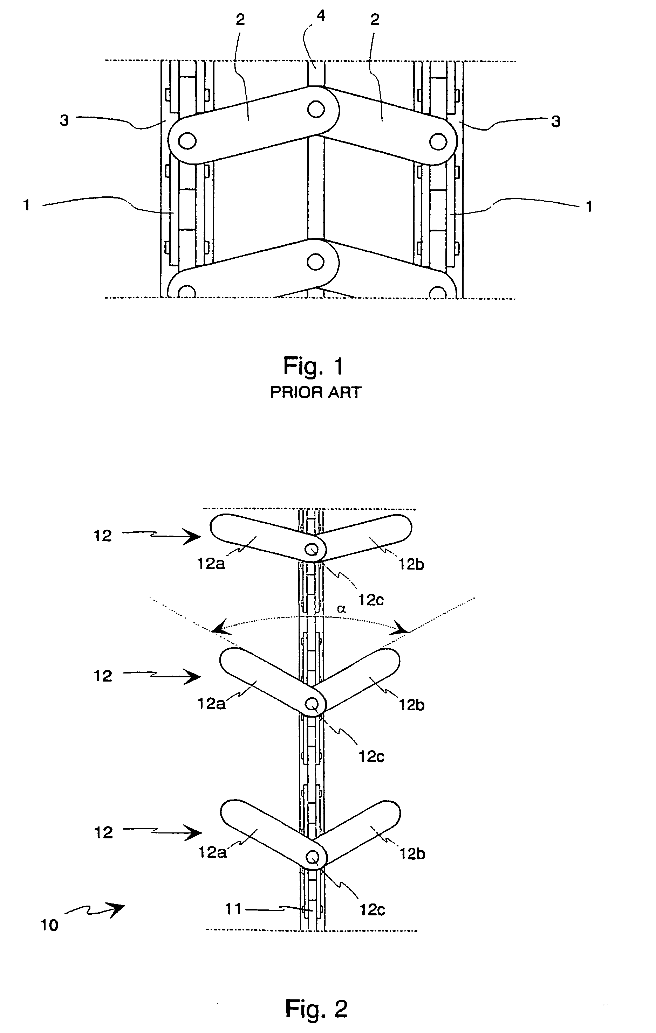

Chain conveyors are generally used for instance in sawing machines to transfer sawn timber. EP-A-0 551 804 describes a prior art chain conveyor having adjustable width, comprising two parallel conveyor chains and conveyor flights attached at regular intervals between these. The prior art design is illustrated in figure 1. Each conveyor flight 2 consists of two longitudinal sections, attached at their outer end to conveyor chain 1 by means of a rotating joint. The innermost ends of the sections are interconnected by means of a rotating joint. The central point of the conveyor flights may be supported by a special guide rail or a guide chain 4. This chain conveyor is said to have the special advantage of an adjustable width, which can be appropriately set by placing the parallel chain guide bars 3 guiding the conveyor chains at the desired mutual distance.

It has been observed in practical operation that prior art chain conveyors do not operate as desired in all situations. In clearing conveyors, with which a sawn timber bundle is conducted out of the sawing machine and from which the side boards ought to be guided by cutters or guides to specific board conveyors, the side boards behave irregularly.

The purpose of the present invention is to provide a chain conveyor of a new type, which achieves improved controllability of the side boards in clearing conveyors. Another purpose of the invention is to provide a clearing conveyor for side boards which involves reliable operation, a straightforward design and low production costs.

The purposes of the invention are achieved by providing the individual conveyor flights with adjustable width.

In the invention a chain conveyor for transporting sawn timber after a sawing machine comprises a group of conveyor flights having mutually displacable sections on which flights sawn timber is born and which flights are adjustable and further the chain conveyor comprises at least one side guide bar at a given point for altering the width of the adjustable conveyor flight at the side guide bar so that the distance between the outermost ends of the sections and simultaneously the width of the bearing surface of the chain conveyor are altered. According to the characterizing features of the invention the chain conveyor comprises one conveyor chain and the flights are attached to the chain and the conveyor flight comprises at least one guide-roller for transmitting a mechanical action between the side guide bar and the conveyor flight.

The chain conveyor in accordance with the invention comprises one single conveyor chain, to which conveyor flights have been attached at regular intervals. The conveyor flight sections are mutually displaceable, so that the distance between the outermost ends of the sections and simultaneously the width of the bearing surface of the chain conveyor are altered at this particular conveyor flight. The mutual movabitity of the convevor flight sections can be accomplished by various technical means. In a particularly preferred embodiment of the invention, the two sections of the conveyor flight are interconnected by a rotating joint at the conveyor chain, and the conveyor flight sections are separated by a spring, which tends to alter the rotational angle between the sections by its springback factor. At various points of the chain conveyor, lateral guide bars with different width may be provided, which affect the mutual position of the conveyor flight sections, the width of the chain conveyor being thus altered. By altering the conveyor width, one can guide it to displace the movement of the boards included in the sawn timber bundle.

The invention is described in greater detail below with reference to preferred embodiments given by way of examples and to the accompanying drawings, in which
- figure 1: shows a prior art chain conveyor,
- figure 2: shows a chain conveyor in accordance with the invention,
- figure 3: shows a number of optional conveyor flights in a chain conveyor in accordance with the invention,
- figures 4a-4d: illustrate a preferred conveyor flight more in detail and
- figure 5: shows the preferred position of the conveyor flights and the side guide bars in a chain conveyor in accordance with the invention.

The above description of the technological background refers to figure 1. and thus the following description of the invention and its preferred embodiments refers to figures 2 to 5. The same reference numerals are used for corresponding parts in the figures.

Figure 2 is a schematic top view of chain conveyor 10, comprising a conveyor chain 11 and conveyor flights 12 attached to this. Each of the conveyor flights includes two sections 12a and 12b, connected to each other and to the conveyor chain by rotating joint 12c, whose axis of rotation runs in a direction perpendicular to the paper surface in figure 2. The rotating angle between the sections of the conveyor flight are marked with α at the central conveyor flight. The extent of the rotating angle is totally independent of the extent of the corresponding rotating angle in the remaining conveyor flights, and thus the chain conveyor shown in figure 2 does not have standard width, but instead, its width may vary at each conveyor flight.

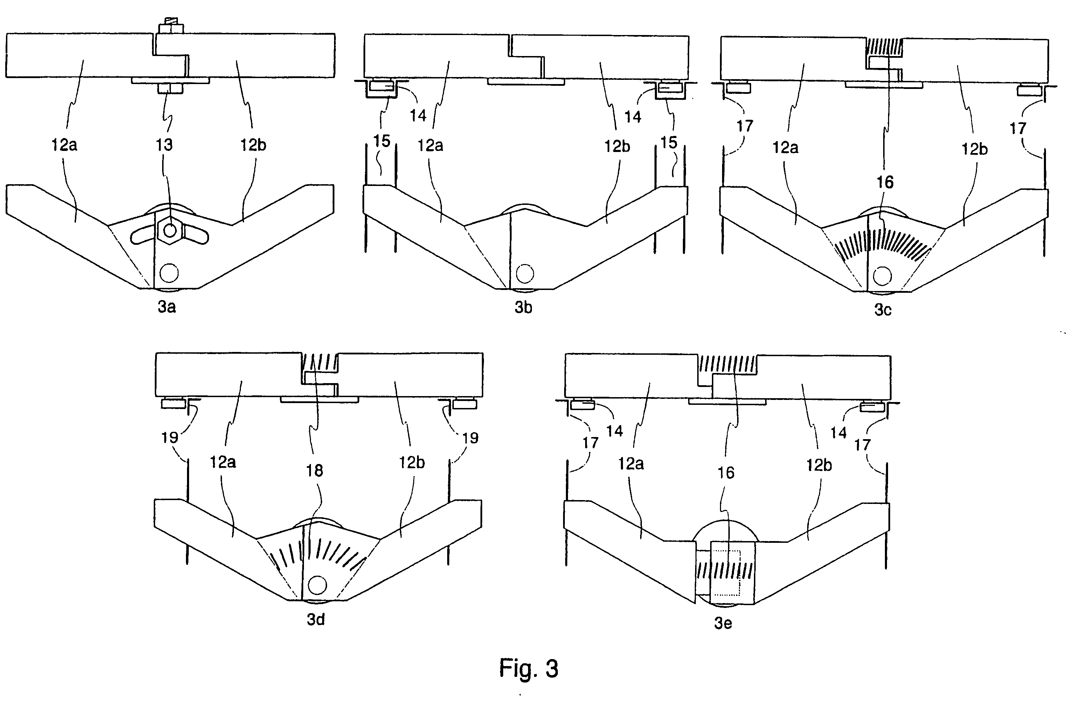

The rotating angle between the sections of the conveyor flight can be acted on by various means, depending on the technical implementation of the conveyor flight. Figure 3 is a schematic view of various Optional conveyor flights. Option 3a is an adjustable conveyor flight, in which the rotating angle between sections 12a and 12b can be set as desired and locked by means of a clamping screw 13. Such a Solution is suitable for chain conveyors which should have a given standard width during operation, however, with the width being adjustable whenever necessary. In addition to or instead of clamping screw 13, a cotter bolt or any method known *per se* for interlocking two mutually movable bodies into a given mutual position may be used. Option 3b is a freely adaptable conveyor flight which does not as such include any mechanism to restrict the rotation of sections 12a and 12b. Nevertheless, the lower surface of both sections is provided with a guide roller 14 and on both sides of the conveyor chain guide grooves 15 are provided, in which guide rollers 14 run when the chain conveyor is operating. When the distance of guide groove 15 from conveyor chain 11 changes, guide roller 14 running in the guide groove curves round a section of the conveyor flight relative to rotating joint 12. Guide grooves 15 may be located symmetrically or asymmetrically relative to conveyor chain 11, conveyor flight sections 12a and 12b rotating accordingly, either symmetrically or asymmetrically.

Option 3c represents a conveyor flight, in which a pressure spring 16 is provided between sections 12a and 12b. The same kind of guide rollers 14 as in option 3b are provided on the lower surface of the sections. Pressure spring 16 tends to press the sections apart, i.e. it tends to enlarge the rotating angle between these. On both sides of conveyor chain 11 external side guide bars 17 are provided, against which the guide rollers are pressed under the effect of pressure spring 16. The distance of the side guide bar from conveyor chain 11 affects the rotating angle in the same way as does the distance of guide groove 15 in option 3b, however, pressure spring 16 makes the inner edge of the guide groove superfluous. In option 3d, the pressure spring has been replaced with a draw-spring 18, the situation being otherwise the same as in option 3c, with the difference that the rotating angle is not regulated by external side guide bars 17, but by internal side guide bars 19. As more complex conveyor options we may cite the adjustment of the rotating angle according to the tensile stress of the conveyor chain or an electromagnetic conveyor flight, in which the rotating angle is set by a small-sized electromagnetic actuator provided in each conveyor flight.

A rotating joint is not the only feasible means for adjusting the width of the conveyor flight Option 3e represents a conveyor flight, in which sections 12a and 12b are mounted so as to be able to slide in a direction perpendicular to the conveyor chain direction. In this option as well, pressure spring 16 tends to press the sections apart and guide rollers 14 underneath them are pressed against external side guide bars 17, so that the mutual distance between the side guide bars determines the width of the bearing surface.

The guide grooves or the side guide bars, which through the guide rollers set the width of the conveyor flights, may be either stationary or movable. In the latter case, the chain conveyor may comprise for instance hydraulic cylinders or other means known *per se* for altering the position of the side guide bars, the side guide rollers being adjustable even during the operation of the conveyor. Movable side guide bars may consist of several sections, whose positions can be altered independently of each other.

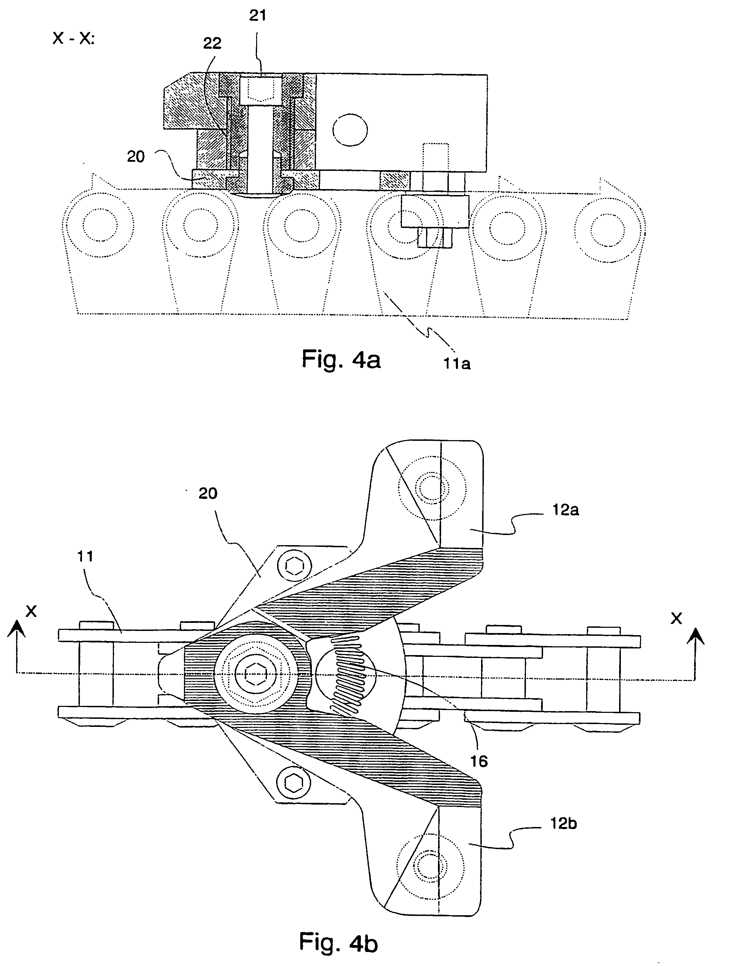

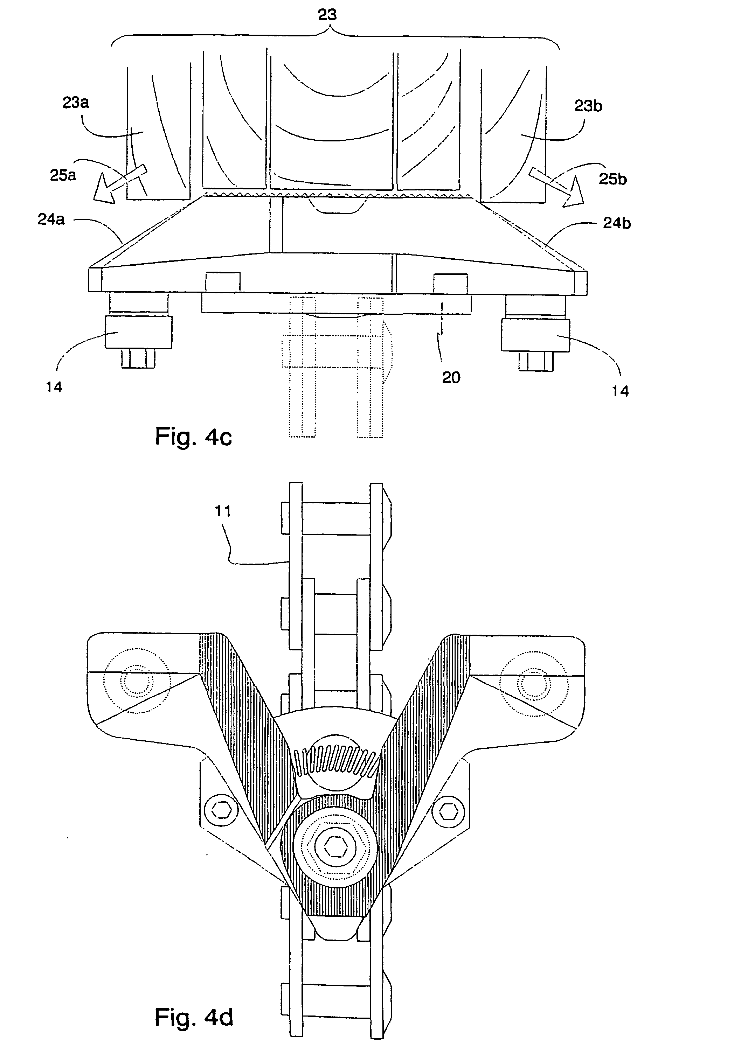

Figures 4a to 4d illustrate more in detail a conveyor flight, whose design and operation has been confirmed to be advantageous, attached to conveyor chain 11. Bottom plate 20 has been fixed to loop 11a of the conveyor chain by welding. Rotating sections 12a and 12b of the conveyor flight have been fixed to bottom plate 20 by means of a bolt 21 and a bushing 22. Sections 12a and 12b are separated by a pressure spring 16 and guide rollers 14 are provided at the ends of sections 12a and 12b, under the conveyor flight. The outermost ends of sections 12a and 12b have bevelled upper surfaces, so that, if a sawn timber bundle 23 on top of the conveyor flight has a width relative to the conveyor fligth width such that its outermost boards 23a and 23b will be placed on bevels 24a and 24b, the outermost boards 23a and 23b tend to be directed downwards and outwards as indicated by arrows 25a and 25b.

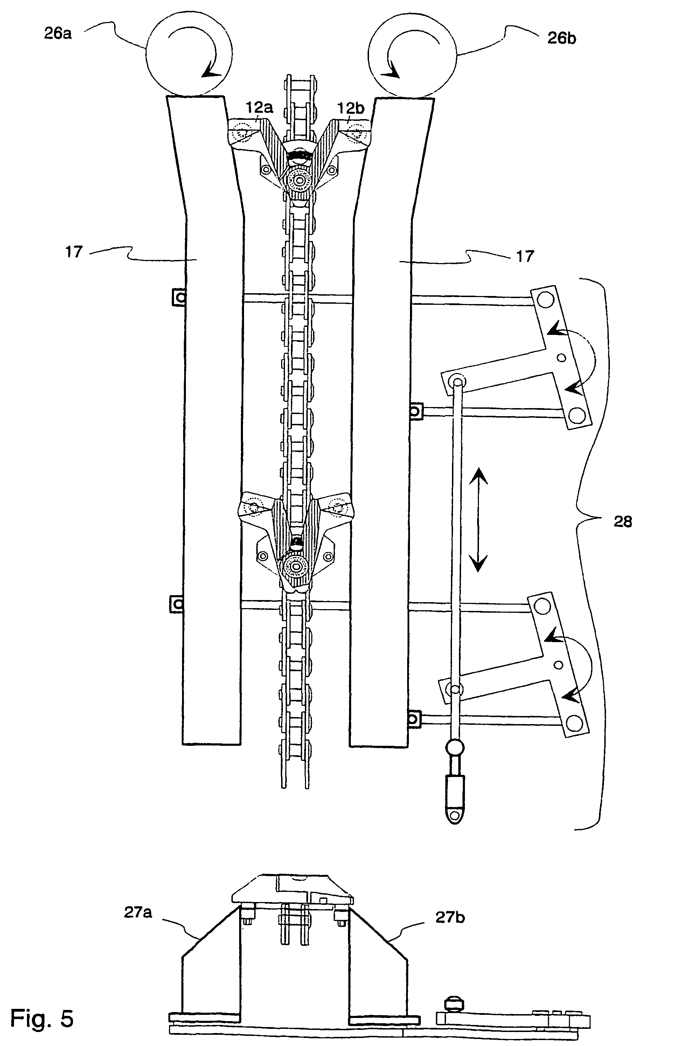

Besides figures 4a to 4d, figure 5 illustrates the operation of a conveyor flight of a chain conveyor in accordance with a preferred embodiment of the invention and how the boards in a sawn timber bundle are guided in a chain conveyor of the invention. As sawn timber bundle 23 leaves the sawing machine transported by the chain conveyor, the cylindrical drive wheels 26a and 26b support the sawn timber bundle in the lateral direction. In addition, in this step, pressure spring 16 in each conveyor flight presses the rotating angle between sections 12a and 12b of the conveyor flight, enlarging it to such an extent that the outermost boards 23a and 23b in the sawn timber bundle 23 (figure 4c) are not supported merely by bevels 24a and 24b. As guide rollers 14 on the lower surface of the conveyor flight touch side guide bars 17, sections 23a and 23b of the conveyor flight rotate closer to each other, resulting in the outermost boards 23a and 23b in the sawn timber bundle 23 being guided away from the central goods 23c and dropping, guided by bevels 24a and 24b and also the inclined guide surfaces 27a and 27b. onto hoard conveyors (not illustrated in the figure) provided on the sides of the chain conveyor. Reference numeral 28 indicates a hydraulic cylinden and an associated level system for altering the position of side guide bars 17.

The chain conveyor of the invention vields excellent controllability of side boards. Since the position of the conveyor flights can be adjusted symmetrically or asymmetrically, the chain conveyor of the invention allows side boards on different sides of the sawn timber bundle to be controlled even independently of each other. The chain conveyor of the invention preferably comprises one single conveyor chain, thus yielding an appreciable decrease in production costs compared to solutions comprising two or more chains: besides the chain, toothed wheels and other special parts required to control the movement of the conveyor chain are avoided in the production. If the chain conveyor of the invention is made very wide, this allows the outermost ends of the conveyor flights to be supported by means of supporting rails or chains mounted under these. In other respects as well, people skilled in the art can easily modify the invention within the limits of ordinary know-how without departing from the scope of protection of the accompanying claims. Thus, for instance, all the conveyor flights of the chain conveyor do not have to correspond to the invention, on the condition that adequate controllability is achieved by providing a horizontally adjustable conveyor flight of the invention say, as every second conveyor flight.

## Claims

1. A chain conveyor (10) for transporting sawn timber (23) after a sawing machine, which conveyor (10) comprises a group of conveyor flights (12) having mutually displacable sections (12a, 12b) on which flights sawn timber is born and which flights (12) are adjustable and further the chain conveyor comprises at least one side guide bar (15, 17, 19) at a given point for altering the width of the adjustable conveyor flight at the side guide bar so that the distance between the outermost ends of the sections (12a, 12b) and simultaneously the width of the bearing surface of the chain conveyor are altered, **characterized in that** the chain conveyor (10) comprises one conveyor chain (11) and the flights (12) are attached to the chain (11) and the conveyor flight comprises at least one guide roller (14) for transmitting a mechanical action between the side guide bar (15, 17, 19) and the conveyor flight (12).

2. A chain conveyor as claimed in claim 1, **characterized in that** the outermost ends (24a, 24b) of the adjustable conveyor flight have bevels (24a, 24b) for guiding the outermost parts (23a, 23b) of multipart goods to be transported apart from the innermost parts.

3. A chain conveyor as claimed in claim 1, **characterized in that** the adjustable conveyor flight comprises two sections (12a, 12b) and a rotating joint (12c) between these and the conveyor chain.

4. A chain conveyor as claimed in claim 1 or 3, **characterized in that** the adjustable conveyor flight comprises a spring (16, 18) between said two sections tending to alter the mutual position of the sections.

5. A chain conveyor as claimed in claim 1, **characterized in that**, in order to unload sawn timber from the sawing machine and to separate side boards from the central goods, it comprises
- side guide bars (17) for reducing the width of the conveyor flights and
- inclined guide surfaces (27a, 27b) at side guide bars (17) for guiding the side boards from their position on the conveyor flights downwards and outwards.

6. A chain conveyor as claimed in claim 5, **characterized in that** said inclined guide surfaces (27a, 27b) are made in one piece with said side guide bars (17).

7. A chain conveyor as claimed in claim 5, **characterized in that** it comprises a mechanism (28) for altering the distance between said side guide bars.

## Patentansprüche

1. Kettenförderer (10) zum Transportieren von gesägtem Schnitt- bzw. Bau- bzw. Nutzholz (23) nach einer Sägemaschine, wobei der Förderer (10) eine Gruppe von Fördererstegen bzw. -stufen bzw. -elementen (12) aufweist, die zueinander verlagerbare Abschnitte bzw. Sektionen (12a, 12b) aufweisen, auf welchen Stegen gesägtes Nutzholz getragen ist und welche Stege (12) einstellbar sind, und wobei der Kettenförderer weiters wenigstens eine Seitenführungsstange (15, 17, 19) an einem gegebenen Punkt umfaßt, um die Breite des einstellbaren Fördererstegs an der Seitenführungsstange zu ändern, sodaß der Abstand zwischen den äußersten Enden der Abschnitte (12a, 12b) und gleichzeitig die Breite der Lageroberfläche des Kettenförderers verändert werden, **dadurch gekennzeichnet, daß** der Kettenförderer (10) eine Förderkette (11) umfaßt und die Stege (12) an der Kette (11) festgelegt sind und der Förderersteg wenigstens eine Führungswalze bzw. -rolle (14) zum Übertragen einer mechanischen Wirkung bzw. Aktion zwischen der Seitenführungsstange (15, 17, 19) und dem Förderersteg (12) umfaßt.

2. Kettenförderer nach Anspruch 1, **dadurch gekennzeichnet, daß** die äußersten Enden (24a, 24b) der einstellbaren Fördererstege Abschrägungen (24a, 24b) zum Führen der äußersten Teile (23a, 23b) von mehrteiligen Waren aufweisen, die weg von den innersten Teilen zu transportieren sind.

3. Kettenförderer nach Anspruch 1, **dadurch gekennzeichnet, daß** der einstellbare Förderersteg zwei Abschnitte (12a, 12b) und eine rotierende Verbindung (12c) zwischen diesen und der Förderkette umfaßt.

4. Kettenförderer nach Anspruch 1 oder 3, **dadurch gekennzeichnet, daß** der einstellbare Förderersteg eine Feder (16, 18) zwischen den zwei Abschnitten umfaßt, die dazu tendiert, die wechselweise Position der Abschnitte zu verändern.

5. Kettenförderer nach Anspruch 1, **dadurch gekennzeichnet, daß**, um das gesägte Nutzholz von der Sägemaschine zu entladen und Seitenbretter von den zentralen Gütern bzw. Waren zu trennen, sie umfaßt
- Seitenführungsstangen (17) zum Reduzieren der Breite der Fördererstege, und
- geneigte Führungsflächen bzw. -oberflächen (27a, 27b) an Seitenführungsstangen (17) zum Führen der Seitenbretter von ihrer Position an den Fördererstegen nach unten und nach außen.

6. Kettenförderer nach Anspruch 5, **dadurch gekennzeichnet, daß** die geneigten Führungsflächen (27a, 27b) in einem Stück mit den Seitenführungsstangen (17) ausgebildet sind.

7. Kettenförderer nach Anspruch 5, **dadurch gekennzeichnet, daß** er einen Mechanismus (28) zum Verändern des Abstands zwischen den Seitenführungsstangen umfaßt.

## Revendications

1. Un transporteur à chaîne (10) pour transporter du bois de sciage (23) sortant d'un banc de scie, dont le transporteur (10) comprend un groupe de palettes (12) du transporteur ayant des sections mutuellement déplaçable (12a, 12b) sur lesquelles palettes le bois de sciage est porté et lesquelles palettes (12) sont réglables, et de plus le transporteur à chaîne comprend au moins un rail de guidage latéral (15, 17, 19) à un point donné pour modifier la largeur de la palette du transporteur réglable au niveau du rail de guidage latéral de telle façon que la distance entre les extrémités les plus extérieures des sections (12a, 12b) et en même temps la largeur de la surface d'appui du transporteur à chaîne sont réglées, **caractérisé en ce que** le transporteur à chaîne (10) comprend une chaîne de transporteur (11) et les palettes (12) sont fixées à la chaîne (11) et une palette du transporteur comprend au moins un rouleau de guidage (14) pour transmettre une action mécanique entre le rail de guidage latéral (15, 17, 19) et la palette du transporteur (12).

2. Un transporteur à chaîne selon la revendication 1, **caractérisé en ce que** les extrémités les plus extérieures (24a, 24b) de la palette du transporteur réglable présente des chanfreins (24a, 24b) pour guider les parties les plus extérieures (23a, 23b) des articles en plusieurs parties pour être transportés en dehors des parties les plus intérieures.

3. Un transporteur à chaîne selon la revendication 1, **caractérisé en ce que** la palette du transporteur réglable comprend deux sections (12a, 12b) et une articulation rotative (12c) entre elles et la chaîne du transporteur.

4. Un transporteur à chaîne selon les revendications 1 ou 3, **caractérisé en ce que** la palette du transporteur réglable comprend un ressort (16, 18) entre lesdites deux sections sollicitant une variation de la position mutuelle des sections.

5. Un transporteur à chaîne selon la revendication 1, **caractérisé en ce que**, afin de décharge le bois de sciage du banc de scie et pour séparer les planches latérales des articles situés au centre, comprend :
- des rails de guidage latéral (17) pour réduire la largeur du transporteur à palettes, et
- des surfaces de guidage inclinées (27a, 27b) au niveau des rails de guidage latéral (17) pour guider les planches latérales de leur position sur le transporteur à palettes vers le bas et vers l'extérieur.

6. Un transporteur à chaîne selon la revendication 5, **caractérisé en ce que** lesdites surfaces de guidage inclinées (27a, 27b) sont faite en une seule pièce avec lesdites rails de guidage latéral (17).

7. Un transporteur à chaîne selon la revendication 5, **caractérisé en ce qu'**il comprend un mécanisme (28) pour régler la distance entre lesdites rails de guidage latéral.
